# EUROPÄISCHE PATENTSCHRIFT

(11) **EP 2 655 499 B1**
(45) Veröffentlichungstag und Bekanntmachung des Hinweises auf die Patenterteilung: **10.05.2017**
(21) Anmeldenummer: 11787843.9
(22) Anmeldetag: 21.11.2011
(51) Int. Cl.: C08K 5/01, C08K 5/00, C08L 21/00, B29L 30/00, B60C 1/00

(54) **KAUTSCHUKMISCHUNG MIT UMWELTFREUNDLICHEM WEICHMACHER**
RUBBER BLEND WITH AN ENVIRONMENTALLY-FRIENDLY PLASTICISER
MÉLANGE DE CAOUTCHOUCS CONTENANT UN PLASTIFIANT ÉCOLOGIQUE

(30) Priorität: 22.12.2010 DE 102010061476
(43) Veröffentlichungstag der Anmeldung: 30.10.2013
(73) Patentinhaber: Continental Reifen Deutschland GmbH, 30165 Hannover (DE)
(72) Erfinder: RECKER, Carla, 30167 Hannover (DE); TORBRÜGGE, Thorsten, 30855 Langenhagen (DE)
(74) Vertreter: Preusser, Andrea
(86) Internationale Anmeldenummer: PCT/EP2011/070534
(87) Internationale Veröffentlichungsnummer: WO 2012/084377

(56) Entgegenhaltungen:
- WO-A1-2004/022644
- WO-A1-2010/012531

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Gute Griffigkeit und geringer Abrieb sind auch bei technischen Gummiartikeln, wie Gurte und Riemen, ein wichtiges Qualitätskriterium.

Um diese Zielkonflikte zu lösen, sind schon vielfältige Ansätze verfolgt worden. So hat man beispielsweise unterschiedlichste, auch modifizierte Polymere, Harze und hochdisperse Füllstoffe für Kautschukmischungen eingesetzt und man hat versucht, die Vulkanisateigenschaften durch Modifikation der Mischungsherstellung zu beeinflussen.

Neben Kautschuk und Füllstoffen bilden die Weichmacher eine andere wichtige Klasse von Zuschlagstoffen. Weichmacher werden Kautschukmischungen zum Teil in großen Mengen zugesetzt, um dem Mischungspreis zu senken, die Fließeigenschaften der Mischung zu verbessern (Energieeinsparung bei der Verarbeitung, Vermeidung von Energiespitzen), die Füllstoffdispersion zu verbessern, das Konfektionier- und das Klebverhalten zu verbessern und die physikalischen Eigenschaften der Mischung und der daraus hergestellten Vulkanisate zu beeinflussen.

In der Regel ist die Basis fast aller in der Kautschukindustrie verwendeten Weichmacher Erdöl. Aus ökologischen Gesichtspunkten, vor allem im Bezug auf die gegebenen Schadstoffemissionen und Rohstoffknappheiten, ist Erdöl zukünftig als Ausgangsstoff für die Herstellung von Kautschuk-Weichmachern nicht mehr tragbar. Als Alternative werden beispielsweise Pflanzenöle als Weichmacher in Kautschukmischungen verwendet, wie beispielsweise in DE 101 08 981 A1 und DE 602 18 446 T2 beschrieben. Die dort beschriebenen Pflanzenöle können als alleiniger Weichmacher eingesetzt werden, meist werden sie aber in Kombination mit einem weiteren, aus Erdöl gewonnenen, Weichmacher verwendet. Aber auch die Pflanzenöle stehen allerdings nicht in beliebigen Mengen für die Kautschukindustrie zur Verfügung.
Als weitere Alternative wird in WO 002010012531 A1 die Verwendung von sogenannten BTL-Ölen (Biomass-To-Liquid-Ölen) beschrieben. Hierbei sind feste Biomassen Ausgangstoff für die Herstellung der Weichmacher, die wiederum über verschiedene Arten der Direktverflüssigung erfolgen kann.

Der Erfindung liegt nun die Aufgabe zu Grunde, eine Kautschukmischung, insbesondere für Fahrzeugluftreifen, Gurte, Riemen und Schläuche, bereitzustellen, die zumindest einen weiteren alternativen und umweltfreundlichen Weichmacher enthält, so dass die gebrauchsbedingten Schadstoffemissionen der Kautschukmischung reduziert werden können. Gleichzeitig soll die Nachhaltigkeit und Umweltverträglichkeit von Kautschukmischungen erhöht werden und es soll eine Unabhängigkeit gegenüber Erdöl als Rohstoffquelle und Energiequelle gewährleistet werden.

Gelöst wird diese Aufgabe durch eine Kautschukmischung mit folgender Zusammensetzung:
- zumindest einen polaren oder unpolaren Kautschuk und
- zumindest einen hellen und / oder dunklen Füllstoff und
- zumindest einen Weichmacher, wobei der Weichmacher frei von polycyklischen Aromaten ist und wobei der Weichmacher auf der Basis kohlenstoffhaltiger Abfallstoffe aus der Herstellung von Reifen und weiterer technischer Kautschukartikel hergestellt wurde, und
- weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von zumindest einem polaren oder unpolaren Kautschuk, zumindest einem hellen und / oder dunklen Füllstoff, weiteren, in der Kautschukindustrie üblichen, Zusatzstoffen und zumindest einem Weichmacher, der frei von polycyklischen Aromaten ist und der auf der Basis kohlenstoffhaltiger Abfallstoffe aus der Herstellung von Reifen und weiterer technischer Kautschukartikel hergestellt wurde, eine bessere Nachhaltigkeit und Umweltverträglichkeit von Kautschukmischungen gewährleistet wird. Gleichzeitig basiert ein derartiger Weichmacher nicht auf Erdöl, so dass hier eine Unabhängigkeit gegenüber dieser Rohstoff- und Energiequelle existiert. Vorteilhaft ist ebenso, dass als Ausgangsmaterial kohlenstoffhaltige Abfälle aus der Reifenherstellung und der Herstellung weiterer technischer Kautschukartikel herangezogen werden, so dass diese Abfälle die Umwelt nicht zusätzlich belasten, sondern entsprechend eine Art "Recycling" erfahren.

Die kohlenstoffhaltigen Abfallstoffe aus der Herstellung von Reifen und weiterer technischer Kautschukartikel werden im Folgenden auch als Kautschukabfallstoff bezeichnet.
Relevant ist hierbei, dass die physikalischen Eigenschaften der Kautschukmischung auf gleichem Niveau verbleiben. Dies gilt nicht nur für den Fahrzeuglaufstreifen, bei geteiltem Laufstreifen insbesondere für die Base, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen, Gurte und Schläuche. Diese technischen Gummiartikel finden im täglichen Leben überall Verwendung, z.B. in Aufzügen, in der Automobilindustrie, in der Rohstoffindustrie, in der Lebensmittelindustrie und in der Medizintechnik. Daher kommt auch hier der verbesserten Umweltverträglichkeit bei gleich bleibenden Mischungseigenschaften eine zentrale Bedeutung zu.

Die Kautschukmischung enthält zumindest einen polaren oder unpolaren Kautschuk.
Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Bevorzugt ist es allerdings, wenn die Kautschukmischung natürliches und / oder synthetisches Polyisopren enthält und zwar in Mengen von 0 bis 50 phr, bevorzugt 0 bis 40 phr, besonders bevorzugt in Mengen von 0 bis 30 phr, wiederum besonders bevorzugt in Mengen von 0 bis 20 phr, wenigstens aber 0,1 phr, insbesondere wenigstens 0,5 phr.
In einer besonderen Ausführungsform handelt es sich bei dem polaren oder unpolaren Kautschuk um einen Butadien-Kautschuk, der hydriert sein kann. Der Butadien-Kautschuk wird vorzugsweise in Mengen von 2 bis 60 phr, bevorzugt in Mengen von 2 bis 50 phr, besonders bevorzugt in Mengen von 5 bis 50 phr, ganz besonders bevorzugt in Mengen von 10 bis 50 phr und wiederum besonders bevorzugt in Mengen von 10 bis 45 phr verwendet.

Der polare oder unpolare Kautschuk kann ein Styrolbutadienkautschuk sein, der bevorzugt lösungspolymerisiert oder emulsionspolymerisiert ist. Der Styrolbutadienkautschuk kann hydriert sein und ist in einer besonders vorteilhaften Ausführungsform lösungspolymerisiert.
Des Weiteren kann der Styrolbutadienkautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, dem Fachmann bekannte, Modifizierungen, auch als Funktionalisierungen bezeichnet, in Frage.
Der Styrolbutadienkautschuk findet in Mengen von 2 bis 98 phr, bevorzugt 2 bis 90 phr, besonders bevorzugt 2 bis 80 phr, wiederum besonders bevorzugt in Mengen von 5 bis 80 phr, Verwendung.

Die erfindungsgemäße Kautschukmischung enthält des Weiteren zumindest einen hellen und / oder dunklen Füllstoff. Die Gesamtmenge an Füllstoff kann somit nur aus hellem oder dunklem Füllstoff oder aus einer Kombination von hellen und dunklen Füllstoffen bestehen.
Bevorzugt ist es, wenn der helle Füllstoff Kieselsäure, bevorzugt Fällungskieselsäure ist.

Die erfindungsgemäße Kautschukmischung enthält 1 bis 300 phr, bevorzugt 1 bis 250 phr, besonders bevorzugt 1 bis 200 phr, wiederum besonders bevorzugt 1 bis 150 phr, wiederum ganz besonders bevorzugt 1 bis 100 phr, Kieselsäure. Von dieser Gesamtmenge an Kieselsäure können 0 bis 100 % durch ein Kupplungsagens, bevorzugt Silan, an die Polymermatrix angebunden werden und / oder 0 bis 100 % nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche größer oder gleich 100 m²/g, bevorzugt zwischen 120 und 300 m²/g, besonders bevorzugt zwischen 140 und 250 m²/g, und einer CTAB-Oberfläche zwischen 100 und 250 m²/g , bevorzugt zwischen 120 und 230 m²/g und besonders bevorzugt zwischen 140 und 200 m²/g, eingesetzt.

Falls ein Kupplungsagens, in Form von Silan oder einer siliziumorganischen Verbindung, verwendet wird, so beträgt die Menge des Kupplungsagens 0 bis 20 phr, bevorzugt 0,1 bis 15 phr, besonders bevorzugt 0,5 bis 10 phr. Als Kupplungsagenzien können dabei alle dem Fachmann für die Verwendung in Kautschukmischungen Kupplungsagenzien verwendet werden.

Bei dem dunklen Füllstoff handelt es sich bevorzugt um Ruß und zwar bevorzugt in Mengen von 0 bis 100 phr, besonders bevorzugt in Mengen von 0 bis 80 phr, wenigstens aber 0,1 phr, insbesondere wenigstens aber 0,5 phr, zumindest eines Rußes. In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Erfindungswesentlich ist, dass die Kautschukmischung zumindest einen Weichmacher, der frei von polycyklischen Aromaten ist, und der auf der Basis kohlenstoffhaltiger Abfallstoffe aus der Herstellung von Reifen und weiterer technischer Kautschukartikel hergestellt wurde, enthält.
Bisher werden Weichmacheröle in der Regel auf der Basis von Erdöl erzeugt, dessen Vorrat begrenzt ist, da es sich um eine endliche fossile Quelle handelt. Um eine Unabhängigkeit von Erdöl als Rohstoff- und Energiequelle zu erlangen und gleichzeitig eine verbesserte Umweltverträglichkeit zu erzielen, entsteht der Weichmacher, der frei von polycyklischen Aromaten ist, durch kohlenstoffhaltige Abfallstoffe, die aus der Reifenherstellung oder aus der Herstellung weiterer technischer Kautschukartikel stammen. Weitere technische Kautschukartikel sind insbesondere Schläuche, Gurte, Riemen, Dichtungen und Membranen, wobei die aufgeführte Liste nicht vollständig ist. Es kann sich bei den Abfallstoffen um grüne Mischungen handeln, d.h. unvulkanisierte oder anvulkanisierte Kautschukmischungen oder um bereits vulkanisierte und gegebenenfalls zerkleinerte Kautschukprodukte, wie beispielsweise Altreifen, Altschläuche, Altgurte und Altriemen.

Polycyklische Aromate sind als besonders umweltkritisch einzustufen und finden sich in der Regel in vielen Substanzen, hier insbesondere Weichmachern, die auf Erdöl als Rohstoff basieren. Frei von polycyklischen Aromaten, auch als polycyklische aromatische Kohlenwasserstoffe bezeichnet, bedeutet, dass der Gehalt an Benzo(a)pyren in dem Weichmacher kleiner 1 mg / kg und die Summe - nach der Direktive 76/769/EEC der Europäischen Gemeinschaft - von Benz(a)anthracen, Chrysen, Benzo(b)flouranthen, Benzo(j)fluoranthen, Benzo(k)fluoranthen, Benzo(e)pyren, Benzo(a)pyren und Dibenz(a,h)anthracen kleiner 10 mg / kg sein muss.

Ein derartiger Weichmacher lässt sich analog der bereits in WO 002010012531 A1 erwähnten Verfahren zur Herstellung von BTL-Ölen herstellen. Unterschieden wird auch hierbei in zweistufige Verfahren, bei denen im Herstellungsprozess im Wesentlichen in einem ersten Verfahrensschritt die Erzeugung eines Synthesegases mittels Vergasung und in einem zweiten Verfahrensschritt die Synthetisierung eines Treibstoffes erfolgt. Weiter sind direkte Verfahren wie es z.B. bereits in DE 102 15 679 A1 und DE 10 2005 040 490 A1 beschrieben ist, bekannt. Es können aber auch weitere Verfahren, wie sie der fachkundigen Person zu Herstellung von Biomasse-zu-Flüssigkeit bekannt sind, verwendet werden, um aus den kohlenstoffhaltigen Abfallstoffen aus der Herstellung von Reifen und weiterer technischer Kautschukartikel die Weichmacher herzustellen, wie sie in der erfindungsgemäßen Kautschukmischung eingesetzt werden. Zu erwähnen sind hier beispielhaft die Flash-Pyrolyse, mit sehr kurzen Verweilzeiten im Reaktor, die hydrierende Direktverflüssigung, wo durch (Druck-)Wasserstoff während der Pyrolyse stabile Produktkohlenwasserstoffe entstehen, das so genannte Carbo-V-Verfahren, welches an das Fischer-Tropsch-Verfahren angelehnt ist und die katalytische Direktverflüssigung, bei der die Pyrolyse in einem Ölsumpf mit Katalysatorbeimengung erfolgt.
Es hat sich allerdings als vorteilhaft erwiesen, wenn der Weichmacher, der frei von polycyklischen Aromaten ist, anhand der katalytischen Direktverflüssigung hergestellt wurde.

In den Verfahren bzw. den Prozessen, die üblicherweise zur Herstellung von Automobilkraftstoffen Anwendung finden, entstehenden häufig Schwerölanteile, die unerwünscht sind und entsorgt werden.
Ebenso ist eine Steuerung der Verfahren zur gezielten Synthese einer geeigneten Schwerölfraktion denkbar.

Überraschenderweise wurde gefunden, dass die Schwerölanteile, welche bei der Direktverflüssigung von kohlenstoffhaltigen Kautschukabfällen entstehen, als Weichmacher, insbesondere als Weichmacheröl, der frei von polycyklischen Aromaten ist, für Kautschukmischungen geeignet sind.

Der Weichmacher, der frei von polycyklischen Aromaten ist, wird in Mengen von 0,1 bis 150 phr, bevorzugt in Mengen von 0,1 bis 120 phr, besonders bevorzugt in Mengen von 0,1 bis 100 phr, wiederum besonders bevorzugt in Mengen von 0,1 bis 80 phr, wiederum ganz besonders bevorzugt in Mengen von 0,1 bis 60 phr, verwendet.

Es kann in der Kautschukmischung noch wenigstens ein zusätzlicher Weichmacher vorhanden sein. Dieser weiterer Weichmacher ist ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder Terpenen und / oder Pflanzenölen und / oder BTL-Ölen und / oder flüssigen Polymeren. Bei Verwendung dieses zusätzlichen Weichmachers beträgt die Menge dieses zusätzlichen Weichmachers oder der Kombination aus zusätzlichen Weichmachern bevorzugt 0,1 bis 20 phr, besonders bevorzugt 0,1 bis 10 phr und ganz besonders bevorzugt 0,1 bis 5 phr.

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.

Weitere Zusatzstoffe beinhaltet im Wesentlichen das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den vom Fachmann gebräuchlichen Mengen (0,4 bis 9 phr, elementarer Schwefel bevorzugt in Mengen von 0 bis 6 phr, besonders bevorzugt in Mengen von 0,1 bis 3 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt.

Die Herstellung der Schläuche erfolgt analog dem im Handbuch der Kautschuktechnologie, Dr. Gupta Verlag, 2001, Kapitel 13.4 beschriebenen Verfahren. Aufgrund der umweltfreundlichen Eigenschaften und der durch die gemäß Direktive 76/769/EEC vorhandenen Freiheit von polycyklischen Aromaten bedingten geringen Cancerogenität findet die erfindungsgemäße Kautschukmischung insbesondere in Lebensmittelschläuchen, hier vor allem Trinkwasserschläuchen, Medizin- und Pharmaschläuchen Verwendung.

Die Erfindung soll nun anhand von Vergleichs- und Ausführungsbeispielen, die in Tabellen 1a bzw. 1b und 2a bzw. 2b zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei Raumtemperatur und 70°C gemäß DIN 53 512
- Spannungswerte bei 100 und 300 % Dehnung bei Raumtemperatur gemäß DIN 53 504
- Zugfestigkeit bei Raumtemperatur gemäß DIN 53 504
- Bruchenergiedichte bestimmt im Zugversuch gemäß DIN 53 504, wobei die Bruchenergiedichte die bis zum Bruch erforderliche Arbeit, bezogen auf das Volumen der Probe, ist
- Abrieb bei Raumtemperatur gemäß DIN53 516 bzw. DIN/ISO 4649
- Bruchdehnung bei Raumtemperatur gemäß DIN 53504

**Tabelle 1a**

| **Bestandteile** | **Einheit** | **V1** | **V2** | **V3** | **E1** |
|---|---|---|---|---|---|
| Polyisopren^{a} | phr | 20 | 20 | 20 | 20 |
| BR^{b} | phr | 44 | 44 | 44 | 44 |
| SSBR^{c} | phr | 36 | 36 | 36 | 36 |
| Kieselsäure^{d} | phr | 95 | 95 | 95 | 95 |
| Mineralöl^{e} | phr | 0 | 45 | 0 | 0 |
| Mineralöl^{f} | phr | 45 | 0 | 0 | 0 |
| Mineralöl ⁱ | phr | 0 | 0 | 45 | 0 |
| Weichmacher^{g} | phr | 0 | 0 | 0 | 55 |
| ZnO | phr | 2,5 | 2,5 | 2,5 | 2,5 |
| Silan^{h} | phr | 6,84 | 6,84 | 6,84 | 6,84 |
| DPG, CBS, Schwefel | phr | 5,6 | 5,6 | 5,6 | 5,6 |

| | | | | | |
|---|---|---|---|---|---|
| ^{a} TSR ^{b} High-cis Polybutadien , cis-Anteil ≥ 95 Gew. -% ^{c} SSBR Styrolbutadienkautschuk, Nipol NS116R, Fa. Nippon Zeon ^{d} VN3, Fa. Evonik ^{e} TDAE, VIVATEC 500, Fa. BP ^{f} MES, CATENEX SNR, Fa. Shell ^{g} Bioöl RTL, hergestellt aus Gummiabfall (abgerauhte LKW-Laufstreifen), 18,4% Feststoffgehalt aus Gummiabfall vorhanden (bestimmt als Aschegehalt per TGA), die Menge an RTL-Öl wurde daher so gewählt, dass die gleiche Menge flüssigen Öls wie bei V1, V2 und V3 vorhanden ist ^{h} A1589, Fa. Momentive Performance Materials ⁱ RAE, FLAVEX 595, Fa. Shell | | | | | |

**Tabelle 1b**

| **Eigenschaften** | **Einheit** | **V1** | **V2** | **V3** | **E1** |
|---|---|---|---|---|---|
| Härte bei RT | Shore A | 68 | 68 | 67 | 69 |
| Härte bei 70°C | Shore A | 65 | 65 | 64 | 63 |
| Rückprall bei RT | % | 34 | 33 | 30 | 27 |
| Rückprall bei 70°C | % | 44 | 45 | 44 | 36 |
| Spannungswert 100% | MPa | 1,9 | 1,9 | 1,9 | 1,7 |
| Spannungswert 300% | MPa | 6,0 | 6,2 | 6,2 | 5,1 |
| Bruchenergiedichte | J/cm³ | 36,7 | 40,0 | 38,4 | 38,7 |
| Bruchdehnung | % | 625 | 640 | 629 | 693 |
| Zugfestigkeit bei RT | MPa | 14,2 | 15,1 | 14,7 | 13,2 |

**Tabelle 2a**

| **Bestandteile** | **Einheit** | **V4** | **V5** | **V6** | **E2** |
|---|---|---|---|---|---|
| Polyisopren^{a} | phr | 10 | 10 | 10 | 10 |
| BR^{b} | phr | 18 | 18 | 18 | 18 |
| SSBR^{c} | phr | 72 | 72 | 72 | 72 |
| Kieselsäure^{d} | phr | 95 | 95 | 95 | 95 |
| Mineralöl^{e} | phr | 0 | 35 | 0 | 0 |
| Mineralöl^{f} | phr | 35 | 0 | 0 | 0 |
| Mineralöl ⁱ | phr | 0 | 0 | 35 | 0 |
| Weichmacher^{g} | phr | 0 | 0 | 0 | 43 |
| ZnO | phr | 2,5 | 2,5 | 2,5 | 2,5 |
| Silan^{h} | phr | 6,84 | 6,84 | 6,84 | 6,84 |
| DPG, CBS, Schwefel | phr | 6 | 6 | 6 | 6 |

| | | | | | |
|---|---|---|---|---|---|
| ^{a} TSR ^{b} High-cis Polybutadien , cis-Anteil > 95 Gew. -% ^{c} SSBR Styrolbutadienkautschuk, Nipol NS116R, Fa. Nippon Zeon ^{d} VN3, Fa. Evonik ^{e} TDAE, VIVATEC 500, Fa. BP ^{f} MES, CATENEX SNR, Fa. Shell ^{g} Bioöl RTL, hergestellt aus Gummiabfall (abgerauhte LKW-Laufstreifen), 18,4% Feststoffgehalt aus Gummiabfall vorhanden (bestimmt als Aschegehalt per TGA), die Menge an RTL-Öl wurde daher so gewählt, dass die gleiche Menge flüssigen Öls wie bei V1, V2 und V3 vorhanden ist ^{h} A1589, Fa. Momentive Performance Materials ⁱ RAE, FLAVEX 595, Fa. Shell | | | | | |

**Tabelle 2b**

| **Eigenschaften** | **Einheit** | **V4** | **V5** | **V6** | **E2** |
|---|---|---|---|---|---|
| Härte bei RT | Shore A | 73 | 73 | 75 | 74 |
| Härte bei 70°C | Shore A | 69 | 69 | 70 | 69 |
| Rückprall bei RT | % | 28 | 26 | 22 | 23 |
| Rückprall bei 70°C | % | 48 | 48 | 46 | 42 |
| Spannungswert 100% | MPa | 3,0 | 2,8 | 3,0 | 2,7 |
| Spannungswert 300% | MPa | 9,9 | 9,9 | 10,2 | 8,7 |
| Bruchenergiedichte | J/cm³ | 27,3 | 27,3 | 31,5 | 36,6 |
| Bruchdehnung | % | 442 | 443 | 466 | 535 |
| Zugfestigkeit bei RT | MPa | 14,5 | 14,9 | 16,2 | 16,2 |
| Abrieb | mm³ | 143 | 127 | 131 | 131 |

Bei Betrachtung der Mischungszusammensetzungen, wie sie in den Tabellen 1a und 2a dargestellt sind, und den resultierenden physikalischen Eigenschaften, wie sie in den Tabellen 1b und 2b dargestellt sind, so lässt sich zusammenfassend feststellen, dass im vergleich zu den Referenzmischungen die physikalischen Eigenschaften erfindungsgemäßen Kautschukmischungen auf gleichem Niveau verbleiben. Hinsichtlich der Spannungseigenschaften bei hoher Dehnung (300%) zeigt sich sogar eine deutliche Verbesserung von E1 und E2 im Vergleich zu den entsprechenden Vergleichsmischungen.

## Patentansprüche

1. Kautschukmischung, **gekennzeichnet durch** folgende Zusammensetzung:
- zumindest einen polaren oder unpolaren Kautschuk und
- zumindest einen hellen und / oder dunklen Füllstoff und
- zumindest einen Weichmacher, wobei der Weichmacher frei von polycyklischen Aromaten ist und wobei der Weichmacher auf der Basis kohlenstoffhaltiger Abfallstoffe aus der Herstellung von Reifen und weiterer technischer Kautschukartikel hergestellt wurde, und
- weitere Zusatzstoffe.

2. Kautschukmischung nach Anspruch 1, **dadurch gekennzeichnet, dass** der polare oder unpolare Kautschuk zumindest ein natürliches oder synthetisches Polyisopren und / oder zumindest ein Butadienkautschuk und / oder zumindest ein Styrolbutadienkautschuk ist.

3. Kautschukmischung nach Anspruch 1 oder 2, **dadurch gekennzeichnet, dass** der helle Füllstoff Kieselsäure ist.

4. Kautschukmischung nach einem der Ansprüche 1 bis 3, **dadurch gekennzeichnet, dass** es sich bei dem dunklen Füllstoff um Ruß handelt.

5. Kautschukmischung nach einem der Ansprüche 1 bis 4, **dadurch gekennzeichnet, dass** der Weichmacher durch katalytische Direktverflüssigung entstanden ist.

6. Kautschukmischung nach einem der Ansprüche 1 bis 5, **dadurch gekennzeichnet, dass** sie 0,1 bis 150 phr des Weichmachers enthält.

7. Verwendung einer Kautschukmischung nach einem der Ansprüche 1 bis 6 zur Herstellung eines Reifens.

8. Verwendung einer Kautschukmischung nach Anspruch 7 zur Herstellung des Laufstreifens oder einer Body-Mischung eines Reifens.

9. Verwendung einer Kautschukmischung nach einem der Ansprüche 1 bis 6 zur Herstellung eines Gurte, Riemens oder Schlauches.

## Claims

1. Rubber mixture **characterized by** the following composition:
- at least one polar or nonpolar rubber and
- at least one pale and/or dark filler, and
- at least one plasticizer, the plasticizer being free from polycyclic aromatics, and the plasticizer having been produced on the basis of carbon-containing wastes from the production of tires and other industrial rubber products, and
- further additives.

2. Rubber mixture according to Claim 1, **characterized in that** the polar or nonpolar rubber is at least one natural or synthetic polyisoprene and/or at least one butadiene rubber and/or at least one styrene-butadiene rubber.

3. Rubber mixture according to Claim 1 or 2, **characterized in that** the pale filler is silica.

4. Rubber mixture according to any of Claims 1 to 3, **characterized in that** the dark filler is carbon black.

5. Rubber mixture according to any of Claims 1 to 4, **characterized in that** the plasticizer has come about as a result of direct catalytic liquefaction.

6. Rubber mixture according to any of Claims 1 to 5, **characterized in that** it contains 0.1 to 150 phr of the plasticizer.

7. Use of a rubber mixture according to any of Claims 1 to 6 for producing a tire.

8. Use of a rubber mixture according to Claim 7 for producing the tread or a body mixture of a tire.

9. Use of a rubber mixture according to any of Claims 1 to 6 for producing a belt, drive-belt, or hose.

## Revendications

1. Mélange de caoutchouc, **caractérisé par** la composition suivante :
- au moins un caoutchouc polaire ou apolaire, et
- au moins une charge claire et/ou sombre, et
- au moins un plastifiant, le plastifiant étant exempt de composés aromatiques polycycliques et le plastifiant ayant été fabriqué à base de déchets carbonés issus de la fabrication de pneus et d'autres articles en caoutchouc techniques, et
- d'autres additifs.

2. Mélange de caoutchouc selon la revendication 1, **caractérisé en ce que** le caoutchouc polaire ou apolaire est au moins un polyisoprène naturel ou synthétique et/ou au moins un caoutchouc de butadiène et/ou au moins un caoutchouc de styrène-butadiène.

3. Mélange de caoutchouc selon la revendication 1 ou 2, **caractérisé en ce que** la charge claire est de la silice.

4. Mélange de caoutchouc selon l'une quelconque des revendications 1 à 3, **caractérisé en ce que** la charge sombre est du noir de carbone.

5. Mélange de caoutchouc selon l'une quelconque des revendications 1 à 4, **caractérisé en ce que** le plastifiant est formé par liquéfaction catalytique directe.

6. Mélange de caoutchouc selon l'une quelconque des revendications 1 à 5, **caractérisé en ce qu'**il contient 0,1 à 150 pce du plastifiant.

7. Utilisation d'un mélange de caoutchouc selon l'une quelconque des revendications 1 à 6 pour la fabrication d'un pneu.

8. Utilisation d'un mélange de caoutchouc selon la revendication 7 pour la fabrication de la bande de roulement ou d'un mélange de corps d'un pneu.

9. Utilisation d'un mélange de caoutchouc selon l'une quelconque des revendications 1 à 6 pour la fabrication d'une ceinture, d'une courroie ou d'un tuyau.
